# EUROPÄISCHE PATENTSCHRIFT

(11) **EP 2 908 093 B1**
(45) Veröffentlichungstag und Bekanntmachung des Hinweises auf die Patenterteilung: **11.04.2018**
(21) Anmeldenummer: 15154259.4
(22) Anmeldetag: 09.02.2015
(51) Int. Cl.: G01B 21/04, G01B 11/25

(54) **Verfahren und Vorrichtung zum optischen berührungslosen Abtasten von Oberflächen**
Method and device for optical contactless scanning of surfaces
Procédé et dispositif de balayage optique sans contact de surfaces

(30) Priorität: 14.02.2014 DE 102014101888
(43) Veröffentlichungstag der Anmeldung: 19.08.2015
(73) Patentinhaber: SmartRay GmbH, 82515 Wolfratshausen (DE)
(72) Erfinder: Gruhn, Torsten, 83671 Benediktbeuern (DE)
(74) Vertreter: Weickmann & Weickmann PartmbB

(56) Entgegenhaltungen:
- EP-A1- 2 189 752
- WO-A1-02/066924
- DE-A1-102004 025 490
- DE-C1- 19 506 642

## Beschreibung

### I. Anwendungsgebiet

Die Erfindung betrifft das optische berührungslose Abtasten von Oberflächen, beispielsweise mittels des Lichtschnitt-Triangulationsverfahrens, mit dem die dreidimensionale Kontur einer Oberfläche abgetastet werden kann.

### II. Technischer Hintergrund

In der Industrie muss häufig die Maßhaltigkeit von Oberflächen-Konturen überprüft werden. Dabei werden häufig optische, berührungslose Abtast-Verfahren benutzt, um jede Gefahr der Beschädigung der Oberfläche zu vermeiden.

Ein gängiges Verfahren ist das sogenannte Lichtschnitt-Triangulationsverfahren, bei dem mittels Laser eine Lichtlinie auf die Oberfläche aufgestrahlt wird und aus einer Blickrichtung, die verschieden ist von der Aufprallrichtung des Lasers, mittels eines optischen Sensors wie etwa eines CCD-Sensors das von der Oberfläche reflektierte Laserlicht aufgenommen wird.

Aus der Form und dem Verlauf des Abbildes der Laserlichtlinie auf dem optischen Sensor kann in Kenntnis des Winkelversatzes zwischen aufgebrachtem Fächer aus Laserlicht und Betrachtungsrichtung des CCD-Sensors die tatsächliche Kontur der Werkstückoberfläche an der Stelle der aufgestrahlten Lichtlinie berechnet werden.

Durch Relativbewegung der Laserlichtlinie quer zu ihrem Verlauf über die Oberfläche kann auf diese Art und Weise die gesamte Oberfläche oder ein Oberflächenbereich abgetastet und vermessen werden.

Um Vertiefungen, Interschnitte etc. ebenfalls gut ermitteln zu können, ist es optimal, wenn der Laser-Lichtfächer in einer Ebene liegt, die lotrecht auf der abzutastenden Oberfläche steht.

Genau diese lotrechte Aufstrahlrichtung ist jedoch problematisch, wenn
- entweder die Oberfläche stark spiegelt, weil dann das Laserlicht in der gleichen Ebene wieder zurückgeworfen wird,
- oder die Oberfläche sich auf einem durchsichtigen Material befindet, da dann das Laserlicht die durchsichtige Oberfläche und das Material darunter einfach durchdringt und überhaupt nicht reflektiert wird.

Das Problem kann man nur teilweise dadurch umgehen, dass der Laser-Lichtfächer in einer nicht lotrecht stehenden Ebene zur Oberfläche aufgestrahlt wird, da dann die Auswertung wie oben dargelegt schwieriger oder die Konturermittlung fehlerhaft sein kann.

Es ist bekannt, dass die Reflexionseigenschaften einer spiegelnden oder transparenten Oberfläche durch Aufbringen eines Wasser- oder Kondensatfilms reversibel und mit vernachlässigbarem Einfluss auf die Oberfläche für die Dauer der Abtastung verändert werden können.

Die DE 10 2004 025 490 A1 zeigt ein mögliches Verfahren, bei dem die Oberfläche des zu vermessenden Objekts für die Dauer der Messung mit einem Kondensatfilm überzogen wird. Zum Aufbringen des Kondensatfilms wird Dampf mittels einer sich neben dem Laserstrahl befindlichen Düse auf die Oberfläche aufgebracht und im Anschluss an die Messung durch kalte und/oder sehr trockene Luft mittels einer weiteren, sich neben dem Laserstrahl befindlichen Düse wieder entfernt.

Aus der DE 195 06 642 C1 ist ein ähnliches Verfahren mit entsprechender Vorrichtung bekannt, bei welchem der Messkopf mit einem Fluidabgabekopf gekoppelt ist und entlang der abzutastenden Oberfläche verfahren wird. Dabei wird der Messbereich mit feinsten Flüssigkeitströpfchen, beispielsweise mittels einer Tröpfchennebel abgebenden Düse, bedeckt. Um die Abscheidung der Tröpfchen auf der Oberfläche zu verbessern und die Haltbarkeit der Flüssigkeitsschicht zu erhöhen wird die Werkstückoberfläche vor und ggf. während der Messung gekühlt.

Aus der WO 02/066924 A1 ist ein Verfahren und eine Vorrichtung zur optischen Erfassung eines Objekts der gattungsgemäßen Art bekannt. Das Objekt wird an einer Vorrichtung vorbeigeführt, welche die zu erfassende Oberfläche zunächst mit einem Niederschlag bestehend aus feinsten Partikeln einer Flüssigkeit versieht, diese optisch erfasst und im Anschluss mit trockener und/oder erwärmter Luft den Niederschlag wieder entfernt.

Ferner ist die Besputterung von Oberflächen mit Partikeln aus der Charakterisierung von beispielsweise biologischen Proben, wie Zellen oder Geweben, bekannt, bei welchen wellenlängenbasierte Messmethoden Verwendung finden. Jedoch werden für diese Zwecke Partikelgrößen im Nanometer-Bereich, wie diese zum Beispiel bei Ruß, Metallen oder Metalloxiden vorkommen, durch chemische Gasphasenabscheidung und meist unter Vakuum, auf das Objekt aufgebracht wie beispielsweise in der EP 2 189 752 A1 gezeigt.

### III. Darstellung der Erfindung

### a) Technische Aufgabe

Es ist daher die Aufgabe gemäß der Erfindung, ein Verfahren und eine Vorrichtung zur Verfügung zu stellen, mit der auch stark spiegelnde oder durchsichtige Oberflächen trotz senkrechter Aufstrahlung optisch berührungslos gut abgetastet werden können.

### b) Lösung der Aufgabe

Diese Aufgabe wird durch die Merkmale der Ansprüche **1** und **8** gelöst. Vorteilhafte Ausführungsformen ergeben sich aus den Unteransprüchen.

Der Grundgedanke der Erfindung besteht darin, durch Aufbringen einer Vielzahl feiner Flüssigkeitströpfchen auf der Oberfläche deren Reflektionseigenschaften zu verändern:
Durch die vielen, etwa linsenförmigen oder halbkugelförmigen Flüssigkeitströpfchen auf der Oberfläche wird ein auftreffender Lichtstrahl bereits vor dem Auftreffen auf der durchsichtigen oder reflektierenden Oberfläche des abzutastenden Substrates reflektiert, nämlich bereits an der gekrümmten Oberfläche des einzelnen Flüssigkeitströpfchens. Dadurch entsteht eine Streuung des aufgestrahlten Lichts in alle Richtungen.

Die Abtastung dieser Oberfläche mit einem optischen berührungslosen Verfahren kann umso genauer erfolgen, je kleiner die Flüssigkeitströpfchen sind und je enger die Flüssigkeitströpfchen zueinander angeordnet sind.

Sobald die Flüssigkeitströpfchen sich zu größeren Tropfen vereinigen, wird die erzeugte Oberflächenstruktur gröber, was für das optische Abtasten und die Vermessung der Oberflächenkontur nachteilig ist.

Die Größe der Flüssigkeitströpfchen muss daher wesentlich geringer sein als die kleinste mögliche Auflösung, die der Messkopf abtasten soll. Wenn also Oberflächenkonturen mit einer Genauigkeit von **50**µ abtastbar sein sollen, darf der in der Aufsicht betrachtete Durchmesser der Flüssigkeitströpfchen höchstens 1/5, besser höchstens **1**/**10** dieser Auflösung betragen, also in diesem Fall maximal **10** µm oder maximal **5** µm.

Je größer die Flächenanteile zwischen den Tröpfchen sind, die nicht von den Flüssigkeitströpfchen bedeckt sind, umso schlechter ist die Abtastbarkeit, da in diesen Bereichen das aufgestrahlte Licht nicht diffus reflektiert wird sondern entweder zu **100**% vollständig reflektiert wird oder die durchsichtige Oberfläche durchdringt.

Ebenso darf nicht zuviel Flüssigkeit auf der Oberfläche abgelagert werden, damit sich nicht anstelle einzelner Flüssigkeitströpfchen eine durchgehende, an ihrer Oberfläche wiederum ebene, Flüssigkeitschicht ergibt, die ebenfalls wiederum problematisch hinsichtlich der optischen Abtastung ist.

Eine Methode, um möglichst feine Flüssigkeitströpfchen in großer Anzahl auf einer Oberfläche abzulagern besteht darin, aus einer Gasphase mit ausreichender Sättigung an der Flüssigkeit die Flüssigkeit auf der Oberfläche abzuscheiden, was insbesondere dann auf einfache Art und Weise erzielbar ist, wenn die Oberfläche eine niedrigere Temperatur besitzt als das flüssigkeitsgesättigte Gas. So kann beispielsweise feuchte Luft auf einer kühleren Oberfläche sehr schnell einen Flüssigkeitsbeschlag in Form vieler feiner Flüssigkeitströpfchen erhalten, da sich um jeden Kondensationskeim, also beispielsweise jedes mikroskopisch kleine Staubkorn auf der Oberfläche, herum ein Flüssigkeitströpfchen abscheidet.

Zu diesem Zweck wird die Oberfläche gekühlt undggf. die darüberstreichende flüssigkeitsgesättigte Luft aufgeheizt.

Eine Kühlung der Oberfläche kann auf einfache Art und Weise durch Darüberströmen von entsprechend kalter Luft erfolgen.

Als Flüssigkeit, die sich in Tröpfchenform auf der Oberfläche ablagern soll, kann Wasser ebenso wie eine andere Flüssigkeit, z. B. Alkohol, gewählt werden. Vorzugsweise soll die Flüssigkeit anschließend sehr schnell und auf einfache Art und Weise wieder entfernt werden können, beispielsweise durch Darüberstreichen von z. B. warmer trockener Luft wieder verdampft werden können.

Flüssigkeitströpfchen können jedoch auch originär hergestellt werden durch Versprühen mittels einer entsprechend feinen Düse, die die Flüssigkeitströpfchen direkt auf die Oberfläche aufsprüht.

Diese Vorgehensweise kann mit einer Vorrichtung verwirklicht werden, die außer dem benötigten optischen Prüfkopf, der die Lichtquelle, den optischen Sensor und gegebenenfalls die Auswerteeinheit enthält, auch eine Flüssigkeitsquelle umfasst. Die Flüssigkeitsquelle ist direkt an dem optischen Prüfkopf befestigt. Dies ist vorteilhaft, da es in der Regel ausreichend ist, nur den Abtastbereich des optischen Prüfkopfes unmittelbar vorher mit den Flüssigkeitströpfchen zu benetzen.

Deshalb ist eine Düse zum Aufbringen von Flüssigkeitströpfchen oder eine Austrittsöffnung zum Ausbringen von flüssigkeitsgesättigtem Gas, beispielsweise feuchter Luft, direkt am optischen Prüfkopf angeordnet, um vorlaufend zur optischen Abtastung die Flüssigkeitströpfchen auf die Oberfläche aufzubringen. Ebenso ist im Nachlauf und ebenfalls befestigt am optischen Prüfkopf eine Vorrichtung zum Entfernen der Flüssigkeitströpfchen angeordnet, beispielsweise eine Düse zum Aufstrahlen von warmer trockener Luft auf die Oberfläche. Auch eine Kühlvorrichtung zum Kühlen der Obefläche ist am Prüfkopf angeordnet,beispielsweise eine Düse zum Ausbringen von kalter Luft. Des Weiteren kann der Prüfkopf eine Heizvorrichtung zum Aufheizen des feuchten Gases aufweisen.

### c) Ausführungsbeispiele

Ausführungsformen gemäß der Erfindung sind im Folgenden beispielhaft näher beschrieben. Es zeigen:
- Fig. **1**:: eine Detektoreinheit nach dem Stand der Technik in der Seitenansicht,
- Fig. **2**:: die Detektoreinheit der Figur **1** in der Frontansicht, jeweils im Einsatz,
- Fig. **3**a - c:: Abbilder der aufgestrahlten Lichtlinie,
- Fig. **4**:: den Strahlengang bei einer bedampften Oberfläche,
- Fig. **5**:: eine erfindungsgemäße Detektoreinheit im Einsatz.

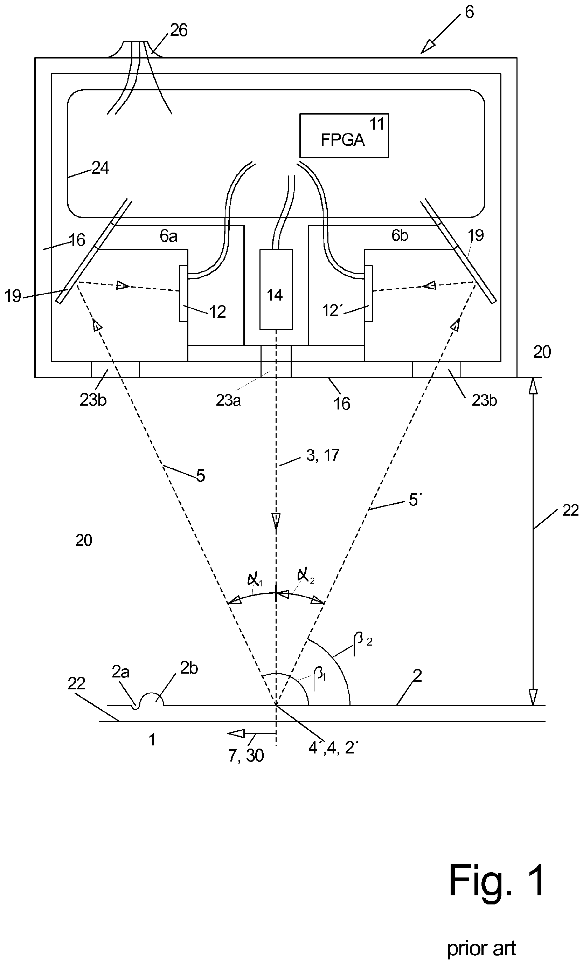

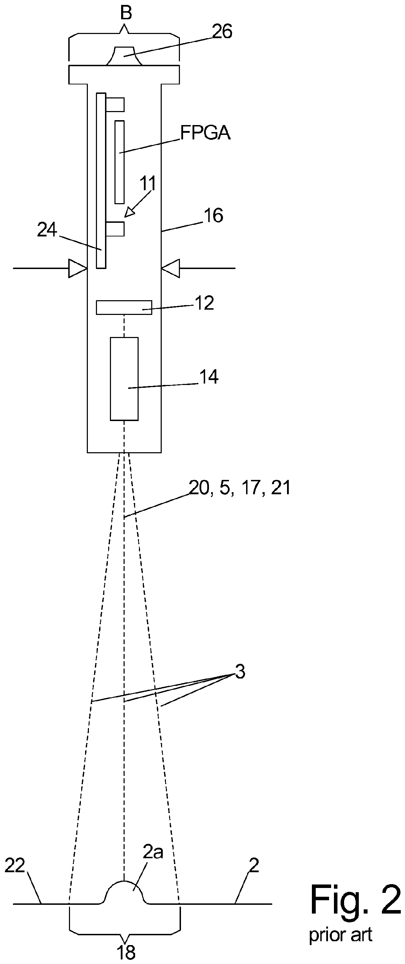

**Figur 1** zeigt einen Prüfkopf **6** in der Seitenansicht, die auch erkennen lässt, wie das bekannte Lichtschnitt-Triangulationsverfahren prinzipiell funktioniert, welches im Rahmen der Erfindung eingesetzt werden kann neben anderen optischen, berührungslosen Prüfverfahren, die auf der Reflektion von Licht an der zu überprüfenden Oberfläche basieren:
Dabei wird ein Lichtstrahl **3,** in der Regel ein Laserstrahl, auf die Prüfstelle **2',** z.B. Lötnaht **2,** eines Objektes **1** gerichtet und erzeugt dort ein Abbild **4,** welches aufgrund der Fächerform des Lichtstrahles **3** - wie in **Figur 2** ersichtlich - streifenförmig ausgebildet ist.

Das von der Oberfläche **2** des Objektes **1** reflektierte Abbild **4** des Lichtstrahles **3** wird im Prüfkopf **6** von zwei Detektoreinheiten **6**a,b mit je einem flächigen, optischen Sensor **12, 12'** aufgenommen und in einer damit verbundenen elektronischen Verarbeitungseinheit **11** zum Verarbeiten der von den Sensoren **12, 12'** aufgenommenen Bilddaten die Ergebnisdaten berechnet..

Damit sich auf dem optischen Sensor **12, 12'** ein Abbild **4** abzeichnet, welches Rückschlüsse auf die tatsächliche Kontur der Oberfläche **2** an dieser Prüfstelle **2'** zulässt, dürfen die Abstrahlrichtung **17** des Lichtstrahls **3** und die Blickrichtung **5, 5'** der Detektoreinheiten **6**a,b nicht zusammenfallen, sondern müssen sich durch einen Triangulationswinkel α₁,α₂ unterscheiden. Vorliegend sind diese beiden Richtungen α₁,α₂ so gewählt, dass sie symmetrisch beidseits der Abstrahlvorrichtung **17,** der Lotrechten **21** auf die Oberfläche **2,** liegen, also von dieser jeweils einen Zwischenwinkel α₁ ≠ α₂ einnehmen.

Eine Unebenheit, beispielsweise eine Erhebung **2**a, auf der Lötnahtfläche **2** im Auftreffbereich des Lichtstrahles **3,** wird als Abbild **4** auf der Oberfläche **2** und damit auch auf dem Sensor **12, 12'** keine gerade Linie, sondern eine Linie mit einer Aufwölbung **4**a darin ergeben, wobei diese Aufwölbung des Abbildes **4,** also der Lichtlinie, abhängig von dem Triangulationswinkel α und dem Betrachtungswinkel β sich von der tatsächlichen Form der Aufwölbung **2**a, geschnitten entlang der Lotrechten **21,** unterscheidet. Wegen der bekannten Winkel α₁, α₂, β₁, β2 sowie der Fokussierung auf die Oberfläche und/oder der Bekanntheit des Abstandes **22** der Detektoreinheit **6**a,b von der Oberfläche **2** kann aus den Abmessungen des Abbildes **4** auf die tatsächlichen Abmessungen der Aufwölbung **2**a auf der Oberfläche **2** rechnerisch geschlossen werden.

Wie **Figur 1** zeigt, ist der Prüfkopf **6** von den Abmessungen in der Hauptebene **20** sehr kompakt aufgebaut, was dadurch erreicht wird, dass die Lichtquelle **14,** in der Regel eine Laserpatrone, nahe des für den Lichtstrahl vorgesehenen Durchlasses **23**a im Gehäuse **16** angeordnet ist und der optische Sensor **12** nahe der anderen Durchlässe **23**b, die sich beide in einer der Schmalseiten des Gehäuses **16** befinden, wobei zwischen diesem Durchlass **23**b und dem optischen Sensor **12, 12'** eine Umlenkung des eintreffenden Lichtstrahls, also der Blickrichtung **5,** über einen Spiegel **19** in eine Richtung etwa parallel zu der Außenkante, in der sich die Durchlässe **23**a, b befinden, erfolgt.

Sowohl der Sensor **12, 12'** als auch der Spiegel **19** sind dabei an einem Detektor-Basiskörper befestigt, der seinerseits am Gehäuse **16** fixiert ist.

Dadurch verbleibt auf der von der Außenseite mit den Durchlässen **23**a, b abgewandten Hälfte des Gehäuses **16** ausreichend viel Platz, um dort eine in der Hauptrichtung **20** des Gehäuses liegende Platine **24** anzuordnen, die die gesamte elektronische Verarbeitungseinheit **11** enthält und mit den Sensoren **12,12'** über elektrische Leitungen ebenso in Verbindung steht wie mit der Lichtquelle **14.** Die von der Verarbeitungseinheit **11** ermittelten Ergebnisdaten werden über einen Stecker **26** ausgegeben.

Die nach dem Lichtschnittverfahren hergestellten Einzelaufnahmen werden in zeitlich schneller Abfolge wiederholt, um die sich in Bewegungsrichtung **7** relativ zur Prüfkopf **6** bewegenden Lötnaht **2** des Objektes **1** durchgängig zu beobachten.

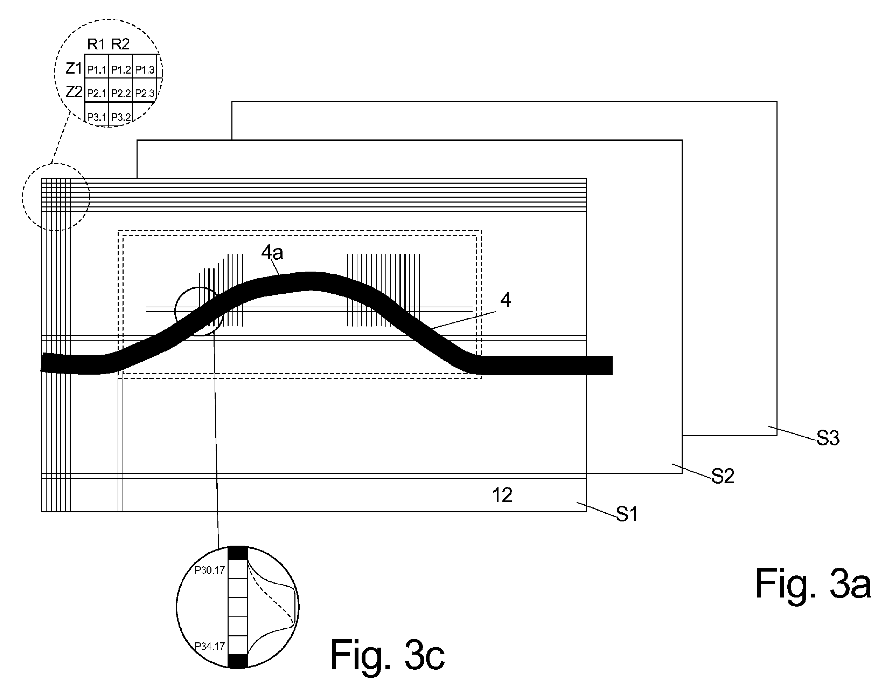

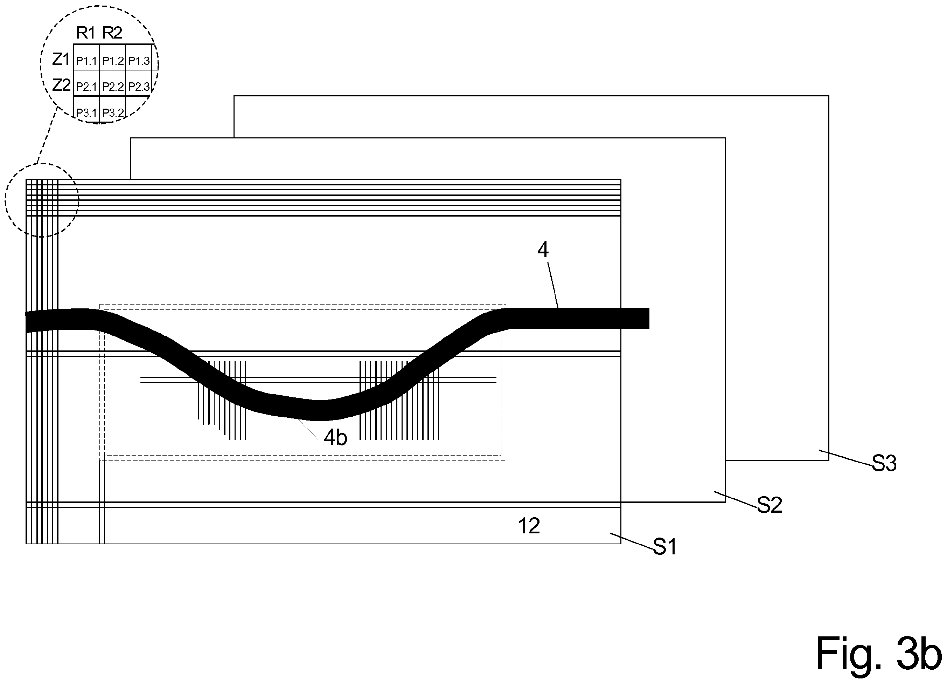

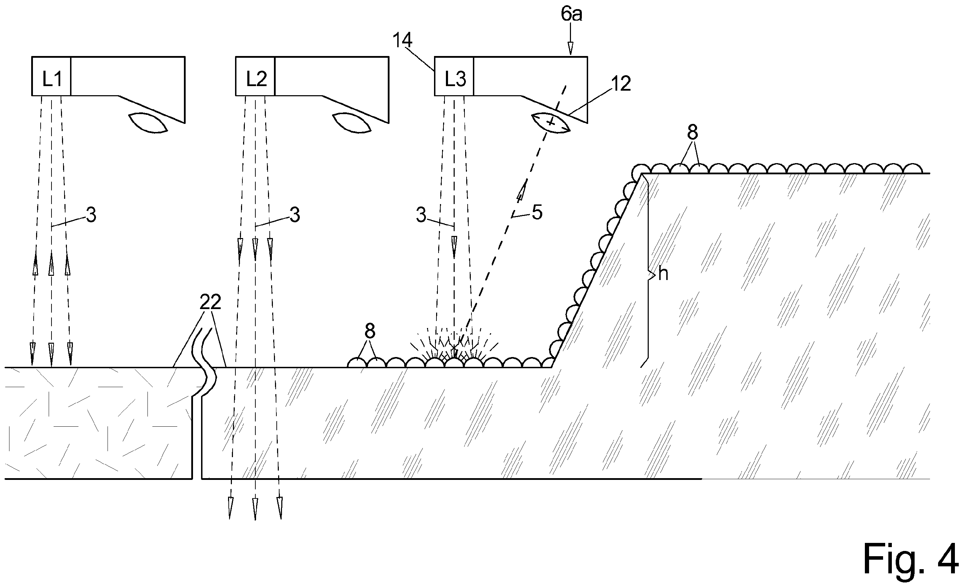

Die **Figuren 3a** **und b** zeigen typische Abbildungen **4** der Lichtlinie **3,** wie sie sich in den beiden Prüfeinheiten **6**a, b auf dem dortigen optischen Sensor **12** darstellen:
Da die Fläche des optischen Sensors **12** durch Zeilen Z**1**, Z**2** usw. sowie durch Reihen R**1**, R**2** rasterartig in einzelne Pixel, zum Beispiel P **30.17,** unterteilt ist, ergibt die Auswertung des optischen Sensors **12,** welche dieser Pixel von dem Abbild **4** berührt sind.

Aus der Geometrie des Prüfkopfes **6** und der darin verbauten Komponenten und seiner Bekannten Lage zur Prüfstelle **2**' kann von der Auswerteelektronik daraus die exakte Querschnittskontur, in diesen Fall der Lötnaht **2,** ermittelt werden, und mithilfe der hintereinander durchgeführten Aufnahmen, der Scans S**1**, S**2** usw. kann die gesamte dreidimensionale Kontur der zu prüfenden Bereiche der Oberfläche ermittelt werden.

**Figur 4** zeigt ein Abtasten der Oberfläche **22,** die einen Absatz in Form eines Höhenabstandes h aufweist, der zeigen soll, wie gut die Auflösung des optischen Prüfkopfes **6** ist.

Im rechten Bildteil besteht das Material, dessen Oberfläche **22** abgetastet werden soll, aus Glas. Ein direkt auf die Glasfläche senkrecht aus einer Lichtquelle **14** in Form eines Lasers L**2** auftreffender Lichtstrahl **3** würde mangels Reflexion an der Glasoberfläche durch das Glas hindurch gehen und überhaupt nicht reflektiert werden, so dass die der optische Sensor **12** der zugeordneten Prüfeinheit **6**a (die andere Prüfeinheit **6**b ist aus Übersichtlichkeitsgründen nicht dargestellt) kein reflektiertes Licht empfangen würde.

Trifft wie bei der Lichtquelle **14** in Form des Lasers L**3** der Lichtstrahl **3** jedoch auf viele kleine nebeneinander, möglichst abstandsfrei direkt aneinander anschließende, Flüssigkeits-Tröpfchen **8** auf, die eine halbrunde oder linsenförmige Oberfläche besitzen, wie im rechten Teil der Figur **4** dargestellt, so reflektieren die Oberflächen der Flüssigkeits-Tröpfchen **8** die Lichtstrahlen **3** in viele verschiedene Richtungen. Durch diese diffuse Reflexion wird ein Teil des reflektierten Lichts auch in Betrachtungs-Richtung **5** reflektiert, und trifft auf dem optischen Sensor **12** der Prüfeinheit **6**a auf.

Auf welche Art und Weise die mit einer linsenförmigen oder halbkugelförmigen Oberfläche ausgestatteten Flüssigkeits-Tröpfchen **8** erzeugt werden, ist zweitrangig, wichtig ist lediglich, dass deren Oberflächenstruktur konvex gekrümmt ist und möglichst geringe Abstände zwischen den einzelnen Flüssigkeits-Tröpfchen **8** vorhanden sind, wobei die Flüssigkeits-Tröpfchen **8** keineswegs - wie in der Figur **4** dargestellt - alle gleich groß sein müssen.

Wichtig ist ferner, dass sich die Flüssigkeits-Tröpfchen **8** beim optischen Abtasten nicht bereits wieder zu einer durchgehenden und dann mit einer glatten Oberfläche ausgestatteten Flüssigkeitsschicht vereinigt haben.

Je kleiner der Durchmesser der Flüssigkeits-Tröpfchen **8** im Vergleich zur maximalen Auflösung der Messvorrichtung, beispielsweise dem Höhen-Abstand h, ist, umso weniger wird das Messergebnis negativ beeinflusst.

Vorzugsweise sollte der Durchmesser der Flüssigkeits-Tröpfchen **8** höchstens ein **1**/**10**tel, besser ein **1**/**30**tel, besser ein **1**/**50**tel der besten Auflösung des Prüfkopfes **6** betragen, also des zum Beispiel kleinsten messbaren Höhen-Abstandes h eines Absatzes in der Oberfläche **22.**

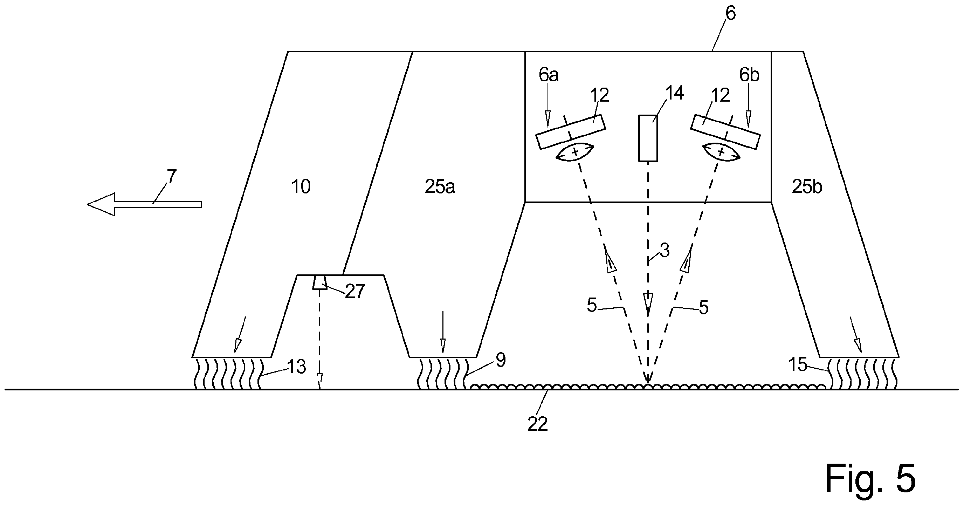

**Figur 5** zeigt einen erfindungsgemäß ergänzten Prüfkopf **6:**
Im mittleren Bereich entspricht der optische Prüfkopf **6** einem bekannten Prüfkopf wie etwa in Figur **1** dargestellt.

In Bewegungsrichtung **7** sind diesem optischen Prüfkopf **6** jedoch weitere Einheiten vor-und nach gelagert, um in dem Bereich, in dem der Lichtstrahl **3** auf der zu prüfenden Oberfläche **22** auftrifft, die anhand von Figur **4** beschriebenen Benetzung mit feinen vielen kleinen Flüssigkeitströpfchen **8** zu bewirken.

In Bewegungsrichtung **7** ist die vorderste Einheit eine Kältequelle **10,** die beispielsweise kalte Luft **13** produziert und aus einer Düse, die auf die Oberfläche **22** auf dem Bewegungspfad des optischen Prüfkopfes **6** gerichtet ist, ausströmen lässt. Dadurch wird die Oberfläche **22** auf eine bestimmte Soll-Temperatur heruntergekühlt, was mithilfe eines Temperatur-Sensor **27** überprüft werden kann, welcher hinter der Ausströmöffnung an der Kältequelle **10** oder an anderer Stelle des Prüfkopfes **6** angeordnet ist und berührungslos die Temperatur der Oberfläche **22** misst.

In Bewegungsrichtung **7** hinter der Ausströmöffnung der Kältequelle **10,** aber noch vor dem optischen Prüfkopf **6** ist ein erster Gasaufbereiter **25** a vorhanden, der ein beliebiges Arbeitsgas, meist Luft, mit der Feuchtigkeit sättigt, aus der die Flüssigkeits-Tröpfchen **8** bestehen sollen, und die so gesättigte und meist auch erwärmte feuchte Luft **9** auf die Oberfläche **22** aufströmt.

Da die Oberfläche **22** deutlich kühler ist als die auftreffende feuchte Luft **9,** wird deren Feuchtigkeit auf der Oberfläche **22** in Form von kleinen Flüssigkeitströpfchen **8** kondensieren.

In die Bewegungsrichtung **7** hinter dem optischen Prüfkopf **6** ist ein weiterer Gasaufbereiter **25** b vorhanden, der wiederum ein Arbeitsgas, meist Luft, aufbereitet, diesmal jedoch indem er das Gas erwärmt und gegebenenfalls zusätzlich trocknet.

Diese trockene Luft **15** wird auf die Oberfläche **22** und die dort noch vorhandenen Flüssigkeitströpfchen **8** ausgebracht, die durch die warme Luft **15** verdampft werden und sich auflösen.

Damit befindet sich die Oberfläche **22** des entsprechenden Werkstückes wieder im ursprünglichen Zustand.

### BEZUGSZEICHENLISTE

- **1**: Objekt
- **2**: Lötnaht
- **2'**: Prüfstelle
- **2**a: Vertiefung
- **2**b: Erhebung
- **3**: Lichtstrahl, Beleuchtungsrichtung
- **4**: Abbild
- **4**a: Aufwölbung
- **4**b: Vertiefung
- **5,5'**: Blickrichtung
- **6**: Prüfkopf
- **6**a,b: Detektoreinheit
- **7**: Bewegungsrichtung
- **8**: Flüssigkeits-Tröpfchen
- **9**: feuchte Luft
- **10**: Kältequelle
- **11**: elektronische Verarbeitungseinheit
- **12, 12'**: optischer Sensor
- 13: kalte Luft
- 14: Lichtquelle
- 15: trockene Luft
- 16: Gehäuse
- 17: Abstrahlrichtung
- 18: Beobachtungsbreite
- 19: Spiegel
- 20: Betrachtungsebene
- 21: Lotrechte
- 22: Oberfläche
- 23: Durchlass
- 24: Platine
- 25a,b: Gasaufbereiter
- 26: Ausgang
- 27: Temperatur-Sensor
- Z**1**: Zeile
- R**1**: Reihe
- S**1**: Scan
- b, B: Breite
- h: Höhen-Unterschied

## Patentansprüche

1. **Vorrichtung** zum optischen, berührungslosen Abtasten von Oberflächen umfassend:
- eine Kältequelle (**10**),
- einen ersten Gasaufbereiter (**25a**) zum Sättigen eines Arbeitsgases mit Feuchtigkeit und
- eine Flüssigkeitsquelle zum Aufbringen von einer Vielzahl von Flüssigkeitströpfchen (**8**) auf die Oberfläche (**22**),
- einen optischen Prüfkopf (**6**) mit einer Lichtquelle (**14**) und einen optischen Sensor (**12**) und,
- einen weiteren Gasaufbereiter (**25b**) zum Produzieren eines erwärmten und/oder getrockneten Arbeitsgases (**15**) und zum Aufbringen des Arbeitsgases (**15**) auf die Oberfläche,
**dadurch gekennzeichnet, dass**
in einer Bewegungsrichtung (**7**) der Vorrichtung
a) die Kältequelle (**10**) die vorderste Einheit ist,
b) der erste Gasaufbereiter (**25a**) hinter der Kältequelle (**10**) und vor dem optischen Prüfkopf (**6**) angeordnet ist und
c) der weitere Gasaufbereiter (**25b**) hinter dem optischen Prüfkopf (**6**) angeordnet ist,
wobei die Vorrichtung einen Temperatursensor (**27**) zum Messen der Temperatur der Oberfläche (**22**) im Abtastbereich aufweist.

2. Vorrichtung nach Anspruch 1,
**dadurch gekennzeichnet,dass**
die Flüssigkeitsquelle eine Düse für die Flüssigkeit oder eine Austrittsöffnung für ein mit der Flüssigkeit gesättigtes Gas, insbesondere Luft (**9**) umfasst.

3. Vorrichtung nach einem der vorhergehenden Vorrichtungsansprüche,
**dadurch gekennzeichnet,dass**
die Flüssigkeitsquelle, insbesondere die Düse oder die Austrittsöffnung, an dem Abtastkopf angeordnet ist.

4. Vorrichtung nach einem der vorhergehenden Vorrichtungsansprüche,
**dadurch gekennzeichnet,dass**
die Vorrichtung eine Heizvorrichtung für das auszubringende flüssigkeitsgesättigte Gas (**9**) umfasst

5. Vorrichtung nach einem der vorhergehenden Vorrichtungsansprüche,
**dadurch gekennzeichnet,dass**
die Kältequelle (**10**) für die zu benetzende Oberfläche (**22**) in Form einer Luftdüse zum Zuführen von kalter Luft (**13**) mit einer niedrigeren Temperatur als die momentane Temperatur der Oberfläche (**22**) ausgeführt ist.

6. Vorrichtung nach einem der vorhergehenden Vorrichtungsansprüche,
**dadurch gekennzeichnet,dass**
der Temperatursensor (**27**) ein berührungsloser Temperatursensor (**27**) ist.

7. Vorrichtung nach einem der vorhergehenden Vorrichtungsansprüche,
**dadurch gekennzeichnet,dass**
die Vorrichtung eine Steuerung aufweist, die in der Lage ist, das Benetzen zu steuern hinsichtlich der Menge der auf der Oberfläche (**22**) abzulagernden Flüssigkeitströpfchen (**8**).

8. **Verfahren** zum optischen, berührungslosen Abtasten von Oberflächen mittels einer Vorrichtung nach Anspruch 1,
**dadurch gekennzeichnet,dass**
die Vorrichtung in einer Bewegungsrichtung (7) entlang der Oberfläche verfahren wird, wobei
- die Kältequelle (10) als vorderste Einheit angeordnet ist,
- der erste Gasaufbereiter (25a) hinter der Kältequelle (10) und vor dem optischen Prüfkopf (6) angeordnet ist,
- der weitere Gasaufbereiter (25b) hinter dem optischen Prüfkopf (6) angeordnet ist, und
- ein Temperatursensor (**27**) der Vorrichtung die Temperatur der Oberfläche (**22**) im Abtastbereich misst.

9. Verfahren nach Anspruch 8,
**dadurch gekennzeichnet,dass**
- eine Vielzahl von Flüssigkeitströpfchen (**8**) nebeneinander auf der Oberfläche (**22**) abgelagert werden,
- anschließend das optische Abtasten erfolgt, solange die einzelnen Flüssigkeitströpfchen (**8**) noch auf der Oberfläche (**22**) ausgebildet sind.

10. Verfahren nach Anspruch 9,
**dadurch gekennzeichnet,dass**
das Aufbringen der Flüssigkeitströpfchen (**8**) so erfolgt, dass die Flüssigkeitströpfchen (**8**) die Oberfläche (**22**) zu einem möglichst großen Anteil bedecken, und/oder die Flüssigkeitströpfchen (**8**) getrennt voneinander auf der Oberfläche (**22**) angeordnet sind.

11. Verfahren nach Anspruch 9 oder 10,
**dadurch gekennzeichnet,dass**
die Flüssigkeitströpfchen (**8**) in einem möglichst geringen Abstand zueinander, insbesondere einem Abstand der geringer ist als ihr in der Aufsicht betrachteter Durchmesser, angeordnet sind.

12. Verfahren nach einem der Ansprüche 9 bis 11,
**dadurch gekennzeichnet, dass**
die Flüssigkeitströpfchen (**8**) möglichst fein sind, insbesondere in der Aufsicht betrachtet einen Durchmesser unter **100**µm, insbesondere unter **30**µm, insbesondere unter **10**µm besitzen.

13. Verfahren nach einem der Ansprüche 9 bis 12,
**dadurch gekennzeichnet,dass**
die Flüssigkeitströpfchen (**8**) so auf der Oberfläche (**22**) abgelagert werden, dass die nebeneinander angeordneten Flüssigkeitströpfchen (**8**) eine feine Reliefstruktur auf der Oberfläche (**22**) bilden.

14. Verfahren nach einem der Ansprüche 9 bis 13,
**dadurch gekennzeichnet,dass**
die Flüssigkeitströpfchen (**8**) durch Aufsprühen einer Flüssigkeit mittels einer Düse auf der Oberfläche (**8**) abgelagert werden.

15. Verfahren nach einem der Ansprüche 9 bis 14,
**dadurch gekennzeichnet,dass**
die Flüssigkeitströpfchen (**8**) durch Abscheiden aus der Gasphase erzeugt werden.

16. Verfahren nach Anspruch 15,
**dadurch gekennzeichnet,dass**
die Abscheidung aus der Gasphase durch eine Temperatur der Oberfläche (**22**) begünstigt wird, die niedriger ist als die Gastemperatur in der Umgebung der Oberfläche (**22**).

17. Verfahren nach einem der Ansprüche 8 bis 16,
**dadurch gekennzeichnet,dass**
die Oberfläche (**22**) vor dem Abscheiden aktiv gekühlt wird, insbesondere durch Aufstrahlen von kalter Luft (**13**) auf die Oberfläche (**22**).

18. Verfahren nach einem der Ansprüche 8 bis 17,
**dadurch gekennzeichnet, dass**
das Abscheiden aus der Gasphase begünstigt wird durch Bestreichen der Oberfläche (**22**) mit einer gegenüber der Oberfläche wärmeren Luft (**9**) oder Gas mit einem hohen Sättigungsgrad darin gelösten Wassers oder einer anderen Flüssigkeit.

## Claims

1. A device for optical touch free scanning of surfaces, the device comprising:
- a cooling source (10),
- a first gas processor (25a) for saturating a process gas with humidity, and
- a liquid source for applying a plurality of liquid drops (8) onto the surface (22),
- an optical scanning head (6) with a light source (14) and an optical sensor (12), and
- another gas processor (25b) for producing a heated and/or dried process gas (15) and for applying the process gas (15) to the surface,
**characterized in that**
in one movement direction (7) of the device
a) the cooling source (10) is the most forward unit,
b) the first gas processor (25a) is arranged behind the cooling source (10) and in front of the optical scanning head (6), and
c) the second gas processor (25b) is arranged behind the optical scanning head (6), wherein the device includes a temperature sensor (27) for measuring a temperature of the surface (22) in a scanning portion.

2. The device according to claim 1,
**characterized in that**
the liquid source includes a nozzle for the liquid or an outlet opening for a gas saturated with the liquid, in particular air (9).

3. The device according to one of the preceding device claims,
**characterized in that**
the liquid source, in particular the nozzle or the outlet opening is arranged at the scanning head.

4. The device according to one of the preceding device claims,
**characterized in that**
the device includes a heating device for the liquid saturated gas (9) to be put out.

5. The device according to one of the preceding device claims,
**characterized in that**
the cooling source (10) for the surface (22) that is to be wetted is configured as an air nozzle for feeding cold air (13) with a temperature that is lower than a current temperature of the surface (22).

6. The device according to one of the preceding device claims,
**characterized in that**
the temperature sensor (27) is a touch free temperature sensor (27).

7. The device according to one of the preceding device claims,
**characterized in that**
the device includes a control which is configured to control the wetting with respect to an amount of liquid drops (8) to be deposited on the surface (22).

8. A method for optical touch free scanning of surfaces by a device according to claim 1,
**characterized in that**
the device is moved in a movement direction (7) along the surface, wherein
- the cooling source (10) is arranged as a most forward unit,
- the first gas processor (25a) is arranged behind the cooling source (10) and in front of the optical scanning head (6),
- the other gas processor (25b) is arranged behind the optical scanning head (6), and
- a temperature sensor (27) of the device measures the temperature of the surface (22) in the scanning portion.

9. The method according to claim 8,
**characterized in that**
- a plurality of liquid drops (8) is arranged adjacent to each other on the surface (22),
- thereafter the optical scanning is performed while the individual liquid drops (8) are still formed on the surface (22).

10. The method according to claim 9,
**characterized in that**
applying the liquid drops (8) is performed so that the liquid drops (8) cover a portion of the surface (22) that is as large as possible, and/or the liquid drops (8) are arranged separately from each other on the surface (22).

11. The method according to claim 9 or 10,
**characterized in that**
the liquid drops (8) are arranged at a distance from each other that is as small as possible, in particular a distance that is smaller than their diameter in a top view.

12. The method according to one of the claims 9 - 11,
**characterized in that**
the liquid droplets (8) are very fine, and have in particular in top view a diameter below 100 µm, in particular below 30 µm, in particular below 10µm.

13. The method according to one of the claims 9 - 12,
**characterized in that**
the liquid droplets (8) are stored on the surface (22) so that the liquid droplets (8) arranged adjacent to one another form a fine pattern structure on the surface (22).

14. The method according to one of the claims 9 - 13,
**characterized in that**
liquid droplets (8) are deposited by spraying a liquid onto the surface (22) by a nozzle.

15. The method according to one of the claims 9 - 14,
**characterized in that**
the liquid droplets (8) are produced by precipitation from the gas phase.

16. The method according to claim 15,
**characterized in that**
the precipitation from the gas phase is supported by a temperature of the surface (22) that is lower than a gas temperature in an ambient of the surface (22).

17. The method according to one of the claims 8 - 16,
**characterized in that**
the surface (22) is actively cooled before precipitation, in particular by blowing cold air (13) onto the surface (22).

18. The method according to one of the claims 8 - 17,
**characterized in that**
the precipitation from the gas phase is supported by blowing air (9) onto the surface (22) which air is warmer than the surface (22) or gas with a high degree of saturation of water or another liquid dissolves therein.

## Revendications

1. Dispositif pour le balayage optique sans contact de surface comprenant :
- une source de froid (10),
- un premier préparateur de gaz (25a) pour la saturation d'un gaz de travail en humidité et
- une source de liquide pour l'application d'un grand nombre de gouttelettes de liquide (8) sur la surface (22) ;
- une tête optique de contrôle (6) munie d'une source de lumière (14) et d'un capteur optique (12) et
- un autre préparateur de gaz (25b) pour la production d'un gaz de travail séché et/ou chauffé (15) et pour l'application du gaz de travail (15) sur la surface ,
**caractérisé en ce que**
dans une première direction de déplacement (7) du dispositif,
a) la source de froid (10) est l'unité avant,
b) le premier préparateur de gaz (25a) est disposé derrière la source de froid (10) et est devant la tête optique de contrôle (6) et
c) l'autre préparateur de gaz (25b) est disposé derrière la tête optique de contrôle (6),
le dispositif présentant une sonde de température (27) pour la mesure de la température de la surface (22) dans la zone de balayage.

2. Dispositif selon la revendication 1,
**caractérisé en ce que**
la source de liquide est une buse pour le liquide ou une ouverture de sortie pour un gaz saturé en liquide, en particulier de l'air (9).

3. Dispositif selon l'une des revendications précédentes,
**caractérisé en ce que**
la source de liquide, en particulier la buse ou l'ouverture de sortie est disposée sur la tête de balayage.

4. Dispositif selon l'une des revendications précédentes,
**caractérisé en ce que**
le dispositif comprend un dispositif de chauffage (9) pour le gaz saturé de liquide à appliquer.

5. Dispositif selon l'une des revendications précédentes,
**caractérisé en ce que**
la source de froid (10) pour la surface (22) à humidifier est réalisée sous forme d'une buse d'air pour l'apport d'air froid (13) à une température inférieure à la température momentanée de la surface (22).

6. Dispositif selon l'une des revendications précédentes,
**caractérisé en ce que**
la sonde de température (27) est une sonde de température (27) sans contact.

7. Dispositif selon l'une des revendications précédentes,
**caractérisé en ce que**
le dispositif présente une commande qui est en mesure de commander l'humidification en fonction de la quantité des gouttelettes (8) à déposer sur la surface (22).

8. Procédé pour le balayage optique sans contact de surface au moyen d'un dispositif selon la revendication 1,
**caractérisé en ce que**
le dispositif est déplacé dans un dispositif de déplacement (7) le long de la surface,
- la source de froid (10) est disposée comme unité en amont
- le premier préparateur de gaz (25a) est disposé derrière la source de froid (10) et devant la tête optique de contrôle,
- l'autre préparateur de gaz (25b) est disposé derrière la tête optique de contrôle (6), et
- une sonde de température (27) du dispositif mesure la température de la surface (22) dans la zone de balayage.

9. Procédé selon la revendication 8
**caractérisé en ce qu'**
- un grand nombre de gouttelettes (8) sont déposées les unes à côté des autres sur la surface (22),
- que le balayage optique est effectué, tant que les gouttelettes de liquide (8) sont encore présentes sur la surface (22).

10. Procédé selon la revendication 9,
**caractérisé en ce que**
l'application des gouttelettes de liquide (8) s'effectue de sorte que les gouttelettes de liquide (8) recouvrent dans la mesure du possible en grande partie de la surface (22).

11. Procédé selon la revendication 9 ou 10,
**caractérisé en ce que**
les gouttelettes de liquide (8) sont disposées à une distance la plus faible possible les unes des autres, en particulier à une distance qui est inférieure à leur diamètre observé en vue de dessus.

12. Procédé selon l'une des revendications 9 à 11,
**caractérisé en ce que**
les gouttelettes de liquide (8) sont les plus fines possible, en particulier présentent un diamètre en vue de dessus inférieur à 100 µm, en particulier inférieur à 30 µm, en particulier inférieur à 10 µm.

13. Procédé selon l'une des revendications 9 à 12,
**caractérisé en ce que**
les gouttelettes de liquide (8) sont disposées sur la surface (22) de sorte que les gouttelettes de liquide (8) disposées l'es unes à côté des autres forment une fine structure en relief sur la surface (22).

14. Procédé selon l'une des revendications 9 à 13,
**caractérisé en ce que**
les gouttelettes de liquide (8) sont déposées sur la surface (22) par pulvérisation d'un liquide au moyen d'une buse.

15. Procédé selon l'une des revendications 9 à 11,
**caractérisé en ce que**
les gouttelettes de liquide (8) sont générées par dépôt en phase gazeuse.

16. Procédé selon la revendication 15,
**caractérisé en ce que**
le dépôt en phase gazeuse est favorisé par une température de la surface (22) qui est inférieure à la température du gaz dans l'environnement de la surface (22).

17. Procédé selon l'une des revendications 8 à 16,
**caractérisé en ce que**
la surface (22) est refroidie activement avant le dépôt en particulier par jet d'air froid (13) sur la surface (22).

18. Procédé selon l'une des revendications 8 à 17,
**caractérisé en ce que**
le dépôt en phase gazeuse est favorisé par balayage de la surface (22) d'un air (9) plus chaud que la surface ou d'un gaz avec un degré élevé de saturation en eau ou autre liquide dissous.
